# EUROPÄISCHE PATENTANMELDUNG

(11) **EP 3 588 154 A1**
(43) Veröffentlichungstag der Anmeldung: **01.01.2020**
(21) Anmeldenummer: 18180296.8
(22) Anmeldetag: 28.06.2018
(51) Int. Cl.: G02B 6/38, G02B 6/255

(54) **STECKERTEIL FÜR EINE OPTISCHE STECKVERBINDUNG**

(71) Anmelder: Diamond SA, 6616 Losone (CH); NEUTRIK AG, 9494 Schaan (LI)
(72) Erfinder: Koch, Matthias, 6840 Götzis (AT); Coggi, Victor, 6616 Losone (CH); Fantini, Dionigi Sergio, 21030 Ghirla (IT)
(74) Vertreter: Hepp Wenger Ryffel AG

(57) **Zusammenfassung**

Ein Steckerteil (1) für eine optische Steckverbindung umfasst eine Stifthalterung (2) und wenigstens zwei in der Stifthalterung aufgenommene Stifthülsen (3, 3'), in denen je ein Steckerstift (4, 4') mit einem Lichtwellenleiter fixiert ist. Ausserdem umfasst das Steckerteil ein mit der Stifthalterung verbundenes Steckergehäuse (8), welches die Steckerstifte ganz oder teilweise umgibt und welches Rastmittel (9) zum Erstellen einer Rastverbindung mit einem Gegensteckerteil aufweist. Ein auf dem Steckergehäuse verschiebbar gelagerter Entriegelungsschlitten (11) dient zum Lösen der Rastverbindung mit dem Gegensteckerteil. Die Stifthalterung besteht aus zwei miteinander verrastbaren oder verrasteten Halbschalen (12, 12') und das Steckergehäuse ist mit der Stifthalterung ebenfalls verrastbar oder verrastet. Ein derartiges Steckerteil kann auch unter erschwerten feldmässigen Bedingungen ohne Werkzeuge montiert und demontiert werden, was für optische Steckverbindungen eine grosse Zeitersparnis bewirkt.

## Beschreibung

Die Erfindung betrifft ein Steckerteil für eine optische Steckverbindung. Derartige Steckerteile sind für die optische Datenübertragung in grosser Vielzahl bekannt und gebräuchlich, wobei je nach Verwendungszweck unterschiedliche Steckerbauformen zur Anwendung kommen. Dabei wird unter anderem differenziert zwischen der Art der Stirnflächenkopplung der einzelnen Lichtwellenleiter und der Mechanik der Steckverbindung.

Eine verbreitete und teilweise auch genormte Verbindungsmechanik ist das sogenannte push/pull-Prinzip, bei dem das anzuschliessende Steckerteil sich beim Einschieben in das Gegensteckerteil verriegelt. Durch Zug am Kabel oder am Steckergehäuse kann die Steckverbindung nicht unterbrochen werden. Das Lösen der Verriegelung erfolgt durch Zug an einem auf dem Steckergehäuse gelagerten Entriegelungsschlitten. Dieses mechanische Verbindungsprinzip kann für Mehrfaserstecker angewendet werden, bei denen eine Mehrzahl von Lichtwellenleitern in einer Reihe unmittelbar nebeneinander angeordnet sind. Das push/pull-Prinzip wird aber auch für Simplex- oder Duplexstecker eingesetzt, bei denen die Lichtwellenleiter hochpräzise zentrisch in einem Steckerstift gefasst sind. Ein derartiges Steckerteil ist beispielsweise bereits in der EP 156 397 B1 beschrieben.

Ein erheblicher Nachteil bekannter Steckerteile dieser Gattung besteht darin, dass die Montage und Demontage komplex und aufwendig ist. Die Steckerteile sind daher nicht feldtauglich, weshalb beispielsweise bei einer Beschädigung der Steckverbindung oder des Lichtwellenleiterkabels eine Reparatur nur mit einem erheblichen Aufwand möglich ist. Dies führt ersichtlicherweise zu einem längeren Unterbruch der Datenübertragung, was bei den heute üblichen und bis zu den Endgeräten führenden Glasfasernetzen nicht mehr tolerierbar ist. Gerade in Notfällen ist es wünschenswert, eine defekte Verbindung auch unter erschwerten feldmässigen Bedingungen wieder herzustellen.

Es ist daher eine Aufgabe der Erfindung, ein Steckerteil für eine optische Steckverbindung zu schaffen, dessen Aussenteile rasch und möglichst ohne Werkzeuge montiert werden können, wobei trotzdem eine hochpräzise Steckverbindung mit einer minimalen Übertragungsdämpfung gewährleistet ist. Insbesondere aber soll eine Möglichkeit geschaffen werden, um zwei hochpräzise Lichtwellenleiter Ferrulen platzoptimiert in einem Steckergehäuse der Baunorm MPO (Multifibre Push On) unterzubringen. Das Steckerteil soll ausserdem preiswert herstellbar und einfach zu handhaben sein. Diese Aufgabe wird mit einem Steckerteil gelöst, das die Merkmale im Anspruch 1 aufweist.

Das Steckerteil umfasst dabei eine Stifthalterung und wenigstens zwei in der Stifthalterung aufgenommene Stifthülsen, in denen je ein Steckerstift mit einem Lichtwellenleiter fixiert ist. Weiter umfasst das Steckerteil ein mit der Stifthalterung verbundenes Steckergehäuse, welches die Steckerstifte ganz oder teilweise umgibt und welches Rastmittel zum Erstellen einer Rastverbindung mit einem Gegensteckerteil aufweist. Zum Lösen der Rastverbindung mit dem Gegensteckerteil ist auf dem Steckergehäuse ein Entriegelungsschlitten verschiebbar gelagert. Die Stifthalterung besteht aus zwei miteinander verrastbaren oder verrasteten Halbschalen und das Steckergehäuse ist mit der Stifthalterung ebenfalls verrastbar oder verrastet. Unter einem Gegensteckerteil wird hier ein rein passives Mittelteil verstanden, dass lediglich dem Anschluss des Steckerteils an eine andere optische Komponente dient, oder auch ein anderes aktives Steckerteil, das die Koppelungsmittel selber aufweist.

Ersichtlicherweise sind alle wesentlichen Bauteile miteinander verrastbar, was die Montage und Demontage erheblich vereinfacht. Die Verwendung von Schrauben oder Schraubenmuttern entfällt ganz. Trotzdem sind die Stifthülsen mit den empfindlichen Steckerstiften austauschbar. Aus fabrikationstechnischen Gründen können die beiden Halbschalen z.B. durch ein Filmscharnier oder anderweitig miteinander verbunden sein.

Besonders optimal kann das erfindungsgemässe Steckerteil eingesetzt werden, wenn das Steckergehäuse, die Rastmittel und der Entriegelungsschlitten derart ausgebildet sind, dass das Steckerteil der Baunorm MPO Multi Fiber push-on entsprechend IEC 61754-7 entspricht und mit einem Gegensteckerteil dieser Baunorm kompatibel ist. Diese Baunorm ist insbesondere für Mehrfaserstecker bereits weit verbreitet, so dass an bestehenden Geräteanschlüssen Mehrfaserstecker und Duplexstecker alternativ eingesetzt werden können. Die Norm betrifft dabei unter anderem die Aussenabmessungen und die Verrastung der Steckerteile.

Weitere erhebliche Vorteile im Zusammenhang mit einer feldmässigen Montage können erzielt werden, wenn die Stifthülsen einen Stiftaufnahmeabschnitt aufweisen, in dem der Steckerstift gehalten ist, sowie einen Kabelaufnahmeabschnitt für den Anschluss an ein Lichtwellenleiterkabel. Dabei weist der Kabelaufnahmeabschnitt zwei miteinander verbindbare oder verbundene Mantelteile auf und im Steckerstift ist ein Lichtwellenleiterstummel gehalten. Dieser Lichtwellenleiterstummel wird bereits werkseitig in den Steckerstift eingesetzt und vorzugsweise hochpräzise zentriert. Das freie, dem Lichtwellenleiterkabel zugewandte Ende des Lichtwellenleiterstummels ist im Bereich der beiden verbundenen Mantelteile mit dem Lichtwellenleiter des Lichtwellenleiterkabels verspleissbar oder verspleisst. Diese Technik ist bereits durch die EP 1 516 215 B1 oder durch die EP 2 394 191 B1 bekannt geworden. Der grosse Vorteil besteht darin, dass bei einer feldmässigen Montage des Steckerstifts der empfindliche Lichtwellenleiter bereits im Steckerstift fixiert und zentriert ist. Der Anschluss an das Lichtwellenleiterkabel erfolgt in einem rückwärtigen Bereich durch Spleissen, wobei der Spleiss durch die beiden miteinander verbundenen Mantelteile eingehüllt und geschützt ist. Die Befestigung in der Stifthalterung und die Montage des eigentlichen Steckergehäuses erfolgt erst nachträglich. An Stelle dieser Spleisstechnik könnten aber wahlweise auch andere Techniken für die Montage des Lichtwellenleiters zum Einsatz kommen.

Optische Steckverbindungen reagieren besonders empfindlich auf eine Veränderung der Distanz zwischen den sich gegenüberliegenden Stirnseiten der Steckerstifte. Es ist daher vorteilhaft, wenn die Stifthülsen unter Federvorspannung an der Stifthalterung abgestützt sind. Damit ist gewährleistet, dass die sich gegenüberliegenden Steckerstifte unter Federvorspannung gegeneinander gepresst werden, wobei der zulässige Federweg in die Gegenrichtung wirkende Kräfte überbrückt.

Um auch diese Federmechanik einfach und schnell montieren zu können, ist es besonders zweckmässig, wenn auf jeder Stifthülse eine Schraubendruckfeder gelagert ist, welche über den Steckerstift auf die Stifthülse aufschiebbar ist und welche mittels einer über den Steckerstift schiebbaren und an der Stifthülse einrastbaren Sicherungshülse gesichert ist. Auf diese Weise lassen sich die Schraubendruckfedern von der Steckerstirnseite her montieren und sichern, was die Montage ersichtlicherweise vereinfacht. Die Steckerstifte können einen Durchmesser von 2,5 mm entsprechend der gängigen Norm aufweisen.
Weitere Vorteile können erreicht werden, wenn an der Stirnseite jedes Steckerstifts eine Kugellinse befestigt ist, welche derart innerhalb einer auf den Steckerstift aufgeschobenen Spannhülse angeordnet ist, dass das freie Ende der Spannhülse bezogen auf die Längsmittelachse des Steckerstifts die Aussenfläche der Kugellinse überragt. Die Kugellinse vergrössert den Querschnitt des zu übertragenden Lichtstrahls, der durch eine identische Kugellinse am Gegensteckerteil wiederum verkleinert wird. Diese Massnahme erlaubt eine ausreichende Datenübertragung auch im Falle einer Verschmutzung oder einer Distanzvergrösserung zwischen den sich gegenüberliegenden Steckerstiften. Da die Spannhülsen die Aussenfläche der Kugellinsen überragen, wird verhindert, dass sich gegenüberliegende Kugellinsen unmittelbar berühren. Selbstverständlich könnten an Stelle der Kugellinsen auch andere Linsentypen eingesetzt werden. Ausserdem ist der Einsatz unterschiedlicher Ferrulen ohne Linsen denkbar, insbesondere Ferrulen mit einem Durchmesser von 1,25 mm.

Die Steckerstifte können in ein Buchsenteil eingeschoben sein, das mit dem Steckergehäuse verrastet ist und in das die Steckerstifte eines Gegensteckerteils einsteckbar sind. Durch diese einfache Massnahme können zwei Steckerteile gleicher Bauart mit oder ohne Buchsenteil als männlicher oder weiblicher Stecker ausgebildet werden. Dabei ist es vorteilhaft, wenn im Buchsenteil für jeden Steckerstift eine schwimmend gelagerte Zentrierhülse angeordnet ist. Diese Zentrierhülse sorgt dafür, dass die darin angeordneten und sich gegenüberliegenden Steckerstifte exakt auf den Aussenmantel der Stifte zentriert werden. Dadurch kann auf komplexe Geometrien zur Gewährleistung der optimalen Winkelausrichtung bei der Montage der Steckerstifte verzichtet werden.

Weitere Vorteile bezüglich Herstellung und Montage können erzielt werden, wenn die beiden Halbschalen der Stifthalterung baugleich ausgebildet sind und wenigstens je eine Rastzunge und wenigstens je eine Rastöffnung aufweisen. Die Stifthalterung besteht dadurch aus zwei identischen Bauteilen, die jedoch einander zugewandt miteinander verrastet werden können. Aus Gründen der besseren Stabilität ist es dabei vorteilhaft, wenn die Halbschalen je zwei Rastzungen und je zwei Rastöffnungen aufweisen. Die Rastzungen und die Rastöffnungen sind dabei an gegenüberliegenden Längsseiten und versetzt an den Halbschalen angeordnet. Die Halbschalen lassen sich als Spritzgussteile aus Kunststoffmaterial besonders einfach und kostengünstig herstellen.

Die Stifthalterung hat vorzugsweise für jede Stifthülse eine separate Haltekammer, wobei die Haltekammern durch einen Zwischensteg voneinander abgetrennt sind. Der Zwischensteg verbessert die Längsstabilität und ermöglicht eine grosse Auflagefläche für jede Stifthülse. Die seitliche Ausrichtung der beiden oben erwähnten Halbschalen kann noch dadurch verbessert werden, dass in den Zwischensteg eingreifende Positioniernasen angeordnet sind. In der Stifthalterung bzw. in den beiden Halbschalen ist ausserdem je ein separates Krimphülsenlager vorgesehen, das die Krimphülsen für die Zugentlastung aufnimmt. Um die Übertragung unerwünschter Torsionskräfte zu vermeiden, können als Verdrehsicherung einzelne Abschnitte der Krimphülsenlager abgeflacht sein.

Ferner weist die Stifthalterung vorteilhaft einen Verbindungsabschnitt auf, der in das Steckergehäuse einschiebbar oder eingeschoben ist und an dem wenigstens eine Rastnase angeordnet ist, die in eine komplementäre Rastöffnung am Steckergehäuse einrastbar ist. Stifthalterung und Steckergehäuse können durch diese Massnahme einfach montiert werden. Der Verbindungsabschnitt gewährleistet dabei eine ausreichende Stabilität gegen Querkräfte. Selbstverständlich wäre es in bestimmten Fällen auch denkbar, dass die Rastnase am Steckergehäuse und die Rastöffnung an der Stifthalterung angeordnet sind. Auch andere Rastmittel wie z.B. Sperrklinken oder dergleichen wären denkbar. Als alternative Art einer gegenseiteigen Verrastung käme auch ein Bajonettverschluss in Frage.

Das Steckergehäuse ist vorteilhaft ein einstückiges Bauteil, das für jede Stifthülse eine separate Aufnahmekammer aufweist, wobei die Aufnahmekammern sich in Längsrichtung zueinander öffnen. Das Steckergehäuse dient primär dem Schutz der empfindlichen Steckerstifte, deren Stirnseiten nur geringfügig über die Stirnseite des Steckergehäuses hinausragen. Durch die Öffnung zwischen den Aufnahmekammern in Längsrichtung kann Material eingespart werden. Wenn das Steckergehäuse im Spritzgussverfahren aus Kunststoffmaterial hergestellt wird, wird dadurch ausserdem die Entformung erleichtert. Der Entriegelungsschlitten ist vorteilhaft mittels zwei Schraubendruckfedern gegen die Steckerstirnseite vorgespannt, wobei die Schraubendruckfedern an je einer Schulter am Steckergehäuse abgestützt sind. Die Schraubendruckfedern lassen sich dabei besonders vorteilhaft und platzsparend an den Längsseiten des Steckergehäuses unterbringen. Je nach Federcharakteristik kann die Zugkraft eingestellt werden, welche erforderlich ist, um die Verriegelung mit einem Gegensteckerteil aufzuheben.

Die Erfindung betrifft auch eine Steckverbindung umfassend ein vorstehend beschriebenes Steckerteil, sowie ein Gegensteckerteil, das entweder als an einer Gehäusewand fixierbare Chassibuchse oder als kabelendseitiger Steckverbinder ausgebildet ist. Je nach Anwendungsfall sind auf diese Weise Steckverbindungen an einer Gehäusewand oder zwischen zwei mobilen kabelendseitigen Steckverbindern möglich. Je nachdem, ob das erfindungsgemässe Steckerteil als männliches oder mit einem Buchsenteil als weibliches Steckerteil ausgebildet ist, kann es sich auch bei der Chassibuchse oder beim kabelendseitigen Steckverbinder um ein männliches oder um ein weibliches Steckerteil handeln.

Weitere Vorteile bei einer derartigen Steckverbindung können erzielt werden, wenn das Gegensteckerteil zusätzlich zu den beiden zum Steckerteil komplementären optischen Eingängen wenigstens einen elektrischen Kontakt für die Erstellung einer elektrischen Steckverbindung aufweist. Derartige hybride Steckverbindungen sind beispielsweise bereits durch die WO 2017/129289 A1 oder durch die EP 3 196 684 A1 bekannt geworden.

Weitere Vorteile bei der feldmässigen Montage eines vorstehend beschriebenen Steckerteils oder auch eines alternativen Steckerteils nach dem Stand der Technik können durch eine besondere Verpackung der Federelemente erzielt werden, welche dafür sorgen, dass der Steckerstift eines Steckerteils unter Federvorspannung gehalten ist. Dabei handelt es sich vorzugsweise um eine Blisterverpackung mit tiefgezogenen Mulden zur Aufnahme von vorzugsweise mehreren Federelementen. Jede Verpackung umfasst wenigstens ein Federelement, welches eine Schraubendruckfeder aufweist, die an einem Ende mit einer Sicherungshülse versehen ist. Dabei ist das Federelement in eine Aufnahmemulde eingelegt, welche bezogen auf die Längsmittelachse das Federelement unverlierbar aufnimmt. Die Schraubendruckfeder ist dabei vorzugsweise ganz entspannt. Auf der der Sicherungshülse abgewandten Seite der Schraubendruckfeder ist die Aufnahmemulde geöffnet oder öffenbar zum Einführen eines Steckerstifts in die Schraubendruckfeder und in die Sicherungshülse bzw. durch diese hindurch. Auf der Seite der Sicherungshülse ist die Aufnahmemulde vorzugsweise soweit verlängert, dass ein eingeführter Steckerstift aufgenommen werden kann. Die Verpackung umfasst ausserdem wenigstens eine Montagemulde, welche im Vergleich zur Aufnahmemulde derart verkürzt ist, dass ein in der Aufnahmemulde durch einen eingeführten Steckerstift aufgenommenes Federelement nach dem Einsetzen in die Montagemulde mit dem Steckerstift verrastbar ist. Die Verrastung erfolgt durch axialen Druck der Stifthalterung gegen die Schraubendruckfeder, wobei diese auch gespannt wird.

Weitere Vorteile und Einzelmerkmale der Erfindung ergeben sich aus der nachfolgenden Beschreibung von Ausführungsbeispielen und aus den Zeichnungen. Es zeigen:
- Figur 1:: Ein erfindungsgemässes Steckerteil in perspektivischer Darstellung,
- Figur 2:: das Steckerteil gemäss Figur 1, jedoch mit von der Stifthalterung getrenntem Steckergehäuse und mit Blick auf die beiden Stifthülsen,
- Figur 3:: eine perspektivische Darstellung der geöffneten Stifthalterung mit je einer Schraubendruckfeder vor der Montage und nach der Montage,
- Figur 4:: eine Seitenansicht auf die geschlossene Stifthalterung gemäss Figur 3,
- Figur 5:: ein Querschnitt durch die Stifthalterung gemäss Figur 4,
- Figur 6:: eine perspektivische Darstellung einer Stifthülse nach dem Anschluss an ein Lichtwellenleiterkabel,
- Figur 7:: eine perspektivische Darstellung der Stifthülse gemäss Figur 6 aus einem anderen Blickwinkel vor dem Anschluss an ein Lichtwellenleiterkabel,
- Figur 8:: eine Draufsicht auf ein alternatives Ausführungsbeispiel einer Halbschale der Stifthalterung gemäss Figur 3,
- Figur 9:: eine stirnseitige Ansicht der Halbschale gemäss Figur 8,
- Figur 10:: eine teilweise geschnittene Seitenansicht der Halbschale gemäss Figur 8,
- Figur 11:: eine perspektivische Darstellung des Steckergehäuses gemäss Figur 2 vor der Montage des Entriegelungsschlittens,
- Figur 12:: eine Seitenansicht des Steckergehäuses gemäss Figur 11,
- Figur 13:: ein Querschnitt durch das Steckergehäuse gemäss Figur 12,
- Figur 14:: ein Längsschnitt durch das Steckergehäuse gemäss Figur 12,
- Figur 15:: eine perspektivische Darstellung eines alternativen Steckergehäuses mit eingesetztem Buchsenteil,
- Figur 16:: eine perspektivische Darstellung des Steckergehäuses gemäss Figur 15 vor der Montage des Entriegelungsschlittens und mit ausgebautem Buchsenteil,
- Figur 17:: eine perspektivische Darstellung des Buchsenteils gemäss Figur 16 mit ausgebauten Zentrierhülsen,
- Figur 18:: eine perspektivische Darstellung einer Kupplungsbuchse mit je einem Steckerteil auf beiden Seiten im ausgesteckten Zustand,
- Figur 19:: die Steckeranordnung gemäss Figur 18 im eingesteckten Zustand,
- Figur 20:: ein Längsschnitt durch das Steckerteil 1' mit eingesetzten Buchsen gemäss Figur 18,
- Figur 21:: ein Längsschnitt durch die Steckverbindung gemäss Figur 19,
- Figur 22:: eine perspektivische Darstellung einer Chassibuchse mit zusätzlichen elektrischen Kontakten,
- Figur 23:: ein Längsschnitt durch die Chassibuchse gemäss Figur 22,
- Figur 24:: eine perspektivische Darstellung eines kabelendseitigen Gegensteckerteils mit zusätzlichen elektrischen Kontakten,
- Figur 25:: eine perspektivische Darstellung einer Anordnung bestehend aus Steckerteil, Chassibuchse und Gegensteckerteil vor dem Zusammenbau,
- Figur 26:: die Anordnung gemäss Figur 25 im zusammengesteckten Zustand,
- Figur 27:: eine perspektivische Darstellung einer Bilsterverpackung für eine Mehrzahl von Federelementen,
- Figur 28:: ein vergrösserter Ausschnitt aus der Darstellung gemäss Figur 27, und
- Figur 29 bis Figur 31:: sequentielle Darstellungen beim Verrasten eines Federelements mit einem Steckerstift.

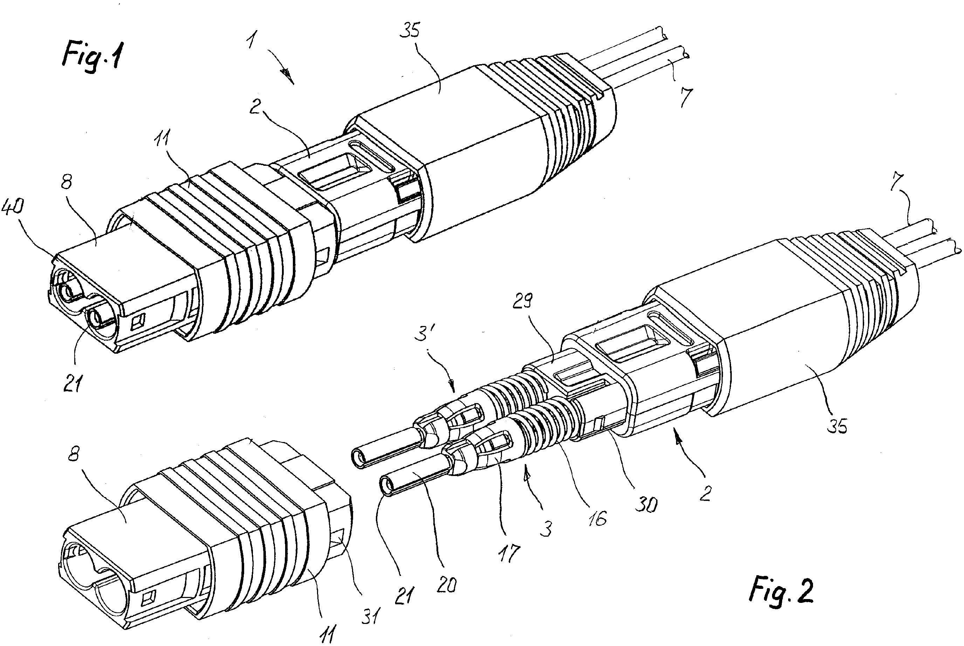

Wie aus den Figuren 1 und 2 ersichtlich ist, besteht ein Steckerteil 1 im Wesentlichen aus einer Stifthalterung 2, den darin gehaltenen Stifthülsen 3, 3' und dem eigentlichen Steckergehäuse 8 mit dem darauf verschiebbar gelagerten Entriegelungsschlitten 11. Beim dargestellten Ausführungsbeispiel entspricht das Steckergehäuse 8 mit den daran angeordneten Rastmitteln und dem Entriegelungsschlitten der Baunorm der MPO Steckerfamilie gemäss IEC 61754-7. Dementsprechend hat das Steckergehäuse 8 im Wesentlichen eine etwa quaderförmige Konfiguration mit einem etwa rechteckigen und an den Schmalseiten leicht abgerundeten Querschnitt.

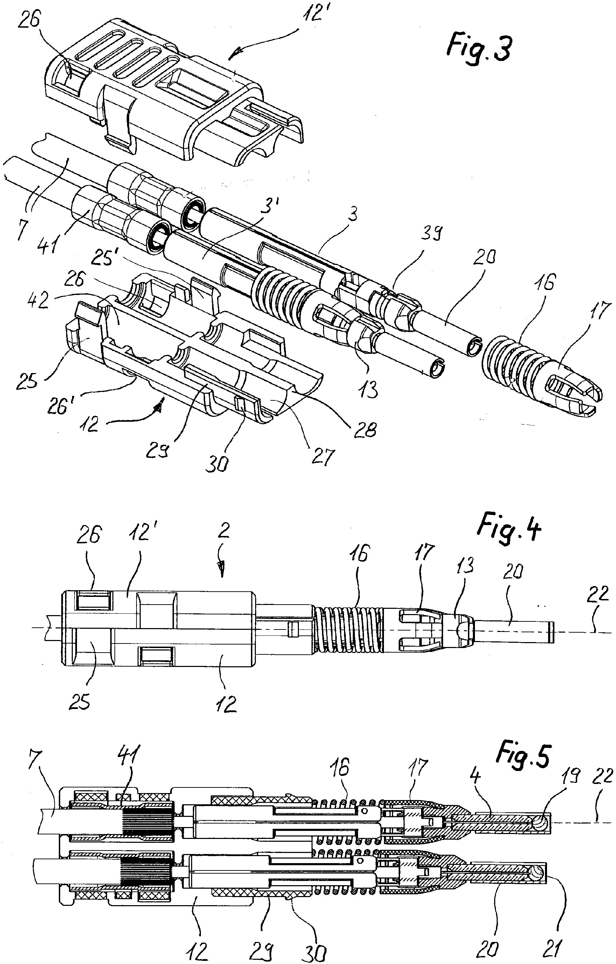

Die Stifthalterung 2 wird an einem Verbindungsabschnitt 29 in das Steckergehäuse 8 eingesteckt, wobei seitliche Rastnasen 30 an der Stifthalterung in korrespondierende Rastöffnungen 31 am Steckergehäuse einrasten. Das Steckergehäuse 8 schützt dabei die beiden Stifthülsen 3, 3' und die Steckerstifte 4 mit den aufgesetzten Kugellinsen 19 (Figur 5), die in den Figuren 1 und 2 nicht sichtbar sind. Sichtbar sind lediglich die Spannhülsen 20, mit denen die Kugellinsen positioniert sind und deren Enden 21, welche geringfügig über die Steckerstirnseite 40 hinausragen.

Von der Kabelseite her kann ein Knickschutz 35 auf die Stifthalterung aufgeschoben werden, welcher verhindert, dass die Lichtwellenleiterkabel 7 mit einem unzulässigen Biegeradius vom Steckerteil weggeführt werden.

Aus den Figuren 3, 4 und 5 sind weitere Details der Stifthalterung 2 und der darin angeordneten Stifthülsen 3, 3' ersichtlich. Wie insbesondere aus Figur 3 ersichtlich ist, besteht die Stifthalterung 2 aus zwei baugleichen Halbschalen 12, 12', welche nach dem Einlegen der Stifthülsen 3, 3' miteinander verrastbar sind. Zu diesem Zweck sind an jeder Halbschale seitlich und versetzt je zwei Rastzungen 25, 25' und zwei Rastöffnungen 26, 26' angeordnet. Werden die Halbschalen aufeinandergelegt, greift jede Rastzunge in die korrespondierende Rastöffnung der Gegenschale, so dass eine stabile, jedoch lösbare Verbindung entsteht.

Jede Stifthülse 3, 3' verfügt über eine eigene Haltekammer 27, wobei die beiden Haltekammern durch einen Zwischensteg 28 voneinander abgetrennt sind. Die Zugentlastung der Lichtwellenleiterkabel 7 erfolgt über Krimphülsen 41, für welche in der Stifthalterung bzw. in den beiden Halbschalen 12, 12' ein separates Krimphülsenlager 42 vorgesehen ist.

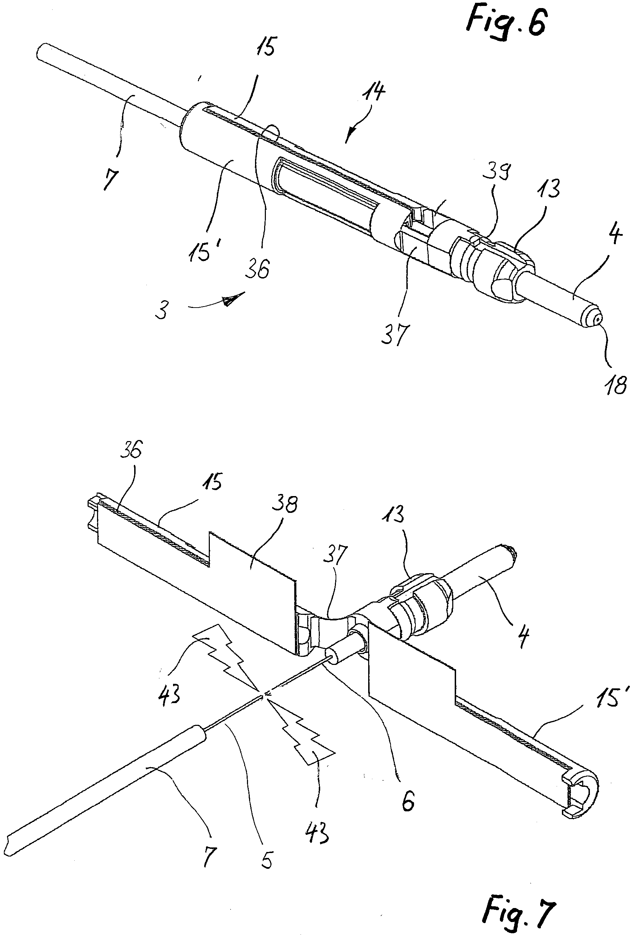

Wie aus Figur 5 ersichtlich ist, ist in jede Stifthülse 3, 3' ein Steckerstift 4 eingesetzt, der dem im Stand der Technik bekannten Konstruktionsprinzip entspricht (z.B. E-2000 ®). Auf jeden Steckerstift ist eine Spannhülse 20 aufgepresst, welche eine Kugellinse 19 am stirnseitigen Ende des Steckerstifts positioniert und zwar derart, dass das Zentrum der Kugellinse exakt auf der Längsmittelachse 22 des Steckerstifts liegt. Das Ende 21 der Spannhülse überragt dabei geringfügig die Aussenfläche der Kugellinse, womit die Kugellinse etwas zurückversetzt in der Spannhülse angeordnet ist. Weitere Details der Stifthülse werden nachstehend an Hand der Figuren 6 und 7 erläutert. Die werkseitig montierten Stifthülsen können feldmässig vor Ort in die Stifthalterung 2 eingesetzt werden, wobei gleichzeitig jede Stifthülse mit einer Schraubendruckfeder 16 zu bestücken ist. Wie in Figur 3 auf der rechten Seite dargestellt, wird die Schraubendruckfeder über die Steckerstifte bzw. über die Spannhülsen 20 geschoben und zwar zusammen mit einer Sicherungshülse 17, deren Klauen an einer umlaufenden Nut 39 einrasten. Im eingebauten Zustand ist jede Schraubendruckfeder 16 an der Stifthalterung abgestützt, womit jede Stifthülse 3, 3' einen bestimmten Federweg zurücklegen kann, wenn in Richtung der Längsmittelachse 22 eine Kraft gegen die Vorspannkraft der Schraubendruckfeder wirkt. Damit können auf an sich bekannte Weise auf die Steckverbindung wirkende Zugkräfte sowie Vibrationsbelastungen kompensiert werden. Die Montage der Schraubendruckfedern über die Steckerstifte ist ersichtlicherweise besonders vorteilhaft, weil die Montage auch nach dem Anschluss der Lichtwellenleiterkabel 7 erfolgen kann. Wie nachstehend noch beschrieben wird, kann eine speziell gestaltete Verpackung der Schraubendruckfedern als Montagehilfe verwendet werden.

Aus den Figuren 6 und 7 sind weitere, aus dem Stand der Technik bereits bekannte Details einer Stifthülse 3 ersichtlich. Diese besteht aus einem Stiftaufnahmeabschnitt 13 mit einer umlaufenden Nut 39 (siehe auch Figur 3). In den Stiftaufnahmeabschnitt 13 ist der Steckerstift 4 mit seiner Stirnseite 18 eingesetzt. Weiter besteht die Stifthülse 3 aus einem Kabelaufnahmeabschnitt 14, der jedoch durch die beiden Mantelteile 15, 15' gebildet wird. Diese beiden Mantelteile sind über je ein Filmscharnier 37 derart mit dem Stiftaufnahmeabschnitt 13 verbunden, dass die Mantelteile, wie aus Figur 7 ersichtlich ist, aufgeklappt werden können. Jedes Mantelteil ist an seiner Kontaktfläche mit einer Haftschicht 36 versehen, welche durch eine Schutzfolie 38 geschützt ist.

Ein Lichtwellenleiterstummel 6 ist werkseitig bereits hochpräzise und zentrisch in den Steckerstift 4 bis zur Stirnseite 18 eingeführt. Ein derart vormontiertes Set einer Stifthülse kann nun feldmässig an das Lichtwellenleiterkabel 7 angeschlossen werden. Zu diesem Zweck wird der vom Schutzmantel befreite Lichtwellenleiter 5 des Lichtwellenleiterkabels 7 mit dem Ende des Lichtwellenleiterstummels 6 verspleisst, was durch die Spleisselektroden 43 symbolisch dargestellt ist. Der Spleissvorgang erfolgt an einem mobilen Spleissgerät, das dem Fachmann ebenfalls aus dem Stand der Technik bereits bekannt ist. Nach dem Spleissvorgang werden die Schutzfolien 38 von der Haftschicht 36 entfernt und die beiden Mantelteile 15, 15' werden um die Filmscharniere 37 gegeneinander gepresst, womit die in Figur 6 dargestellte Stifthülse entsteht. Nach dem Aufsetzen der Krimphülsen 41 können diese Stifthülsen wie vorstehend beschrieben in die Stifthalterung eingesetzt werden.

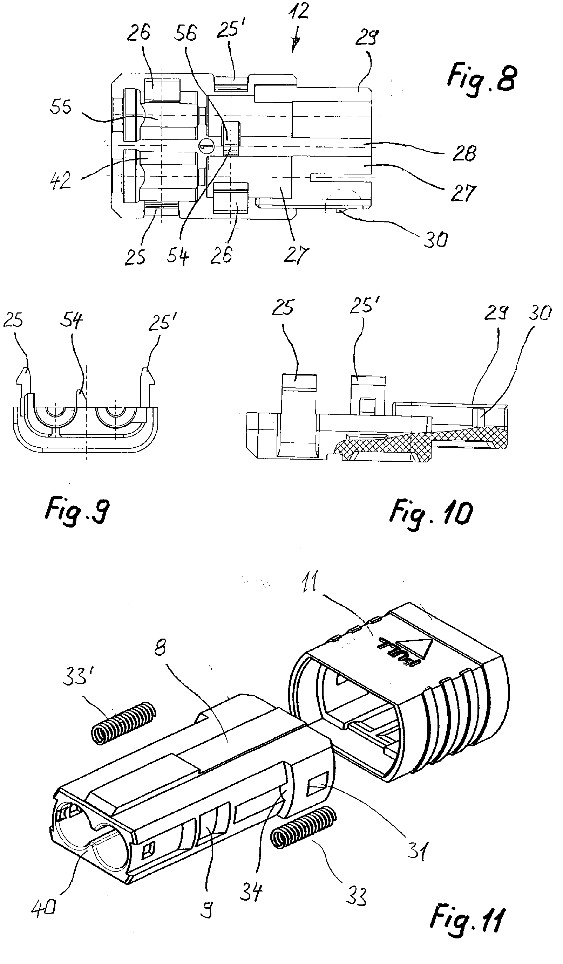

In den Figuren 8 bis 10 ist eine im Vergleich zu Figur 3 etwas modifizierte Halbschale 12 dargestellt. Zur Verbesserung der seitlichen Ausrichtung von zwei zusammengesetzten Halbschalen ist im Zwischensteg 28 zur Symmetrieachse versetzt eine Positioniernase 54 angeordnet. Diese Positioniernase greift an der gegenüberliegenden Halbschale in eine korrespondierende und ebenfalls aussermittig angeordnete Aussparung 56. Ersichtlicherweise müssen somit Querkräfte zwischen den beiden zusammengelegten Haltschalen nicht nur durch die beiden Rastzungen 25, 25' aufgenommen werden.

Ein weiterer Unterschied des hier dargestellten Ausführungsbeispiels besteht auch noch darin, dass die beiden Krimphülsenlager 42 je eine Abflachung 55 aufweisen. Diese dient der Verdrehsicherung der eingelegten Krimphülsen an einer korrespondierenden Fläche. Dadurch können vom Kabel ausgehende unerwünschte Torsionskräfte aufgefangen werden.

Einzelheiten des Steckergehäuses 8 sind aus den Figuren 11 bis 14 ersichtlich. Das eigentliche Steckergehäuse 8 ist ein einstückiges Bauteil, das auf der der Stifthalterung 2 zugewandten Seite auf jeder Schmalseite mit einer Schulter 34 versehen ist. An diesen Schultern sind Schraubendruckfedern 33 abgestützt, welche den auf das Steckergehäuse 8 aufgeschobenen Entriegelungsschlitten in Richtung Steckerstirnseite 40 vorspannen. Der Entriegelungsschlitten 11 ist als geschlossene Hülse ausgebildet, welche das Steckergehäuse 8 vollständig umgibt. Im vorgespannten Zustand überdeckt der Entriegelungsschlitten 11 die ebenfalls seitlich angeordneten Mulden 9, welche als Rastmittel zum Verrasten mit einem Gegensteckerteil dienen. Durch Zurückziehen des Entriegelungsschlittens 11 gegen die Vorspannkraft der Schraubendruckfedern 33 werden die Rastmittel 9 freigelegt, so dass die Rastverbindung des Steckergehäuses gelöst werden kann. Die Rastöffnungen 31 zum Einrasten der Stifthalterung sind im verbreiterten Teil des Steckergehäuses hinter den Stützschultern 34 angeordnet.

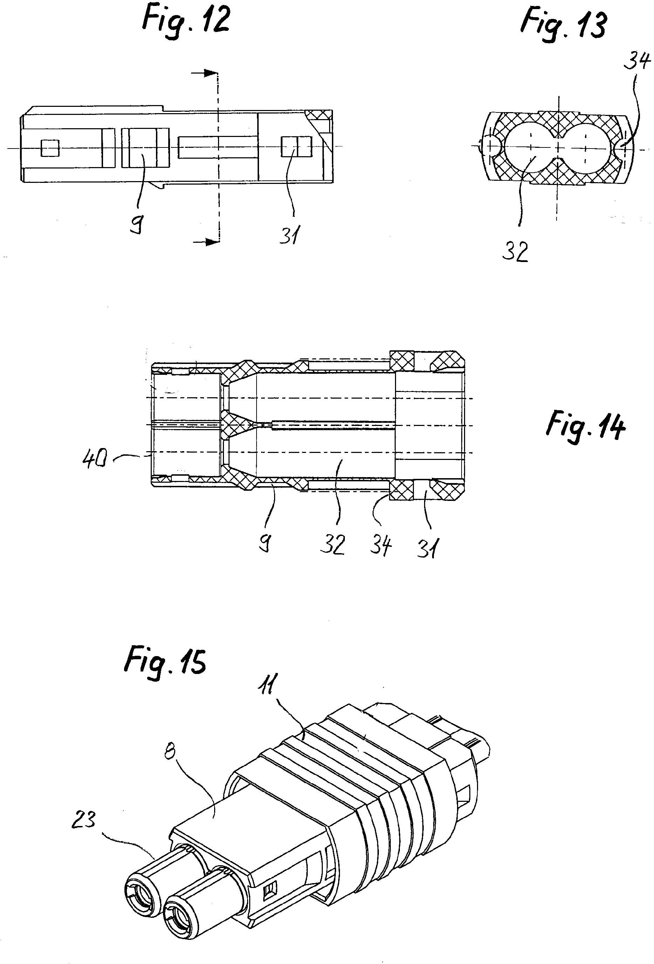

Das Steckergehäuse 8 bildet für die Aufnahme der Stifthülsen je eine Aufnahmekammer 32. Wie insbesondere aus Figur 13 ersichtlich ist, sind diese im Querschnitt kreisförmigen Aufnahmekammern jedoch nicht voneinander getrennt, sondern zueinander in Längsrichtung geöffnet.

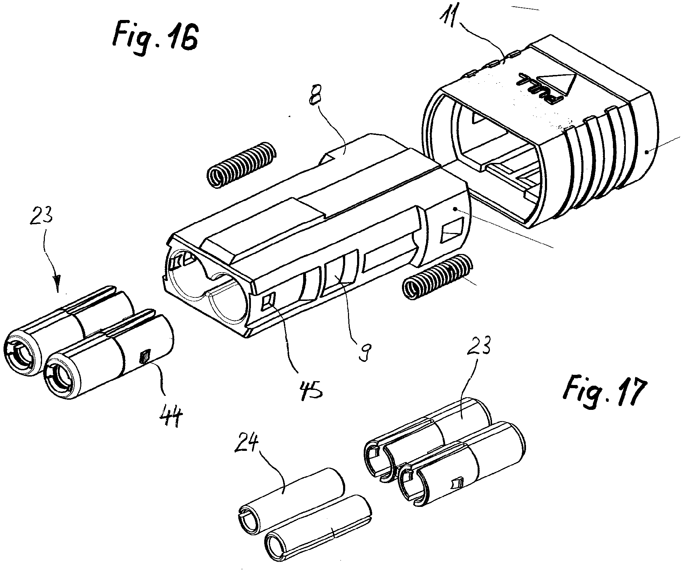

Die Figuren 15 bis 17 zeigen eine weibliche Version eines Steckerteils mit einem von der Stirnseite 40 her in das Steckergehäuse 8 eingeführten Buchsenteil 23. Der Aufbau des Steckergehäuses mit dem aufgesetzten Entriegelungsschlitten 11 ist völlig identisch, wie in Figur 11 dargestellt. Die Steckerstifte bzw. die sie umgebenden Spannhülsen liegen jedoch nicht frei im Steckergehäuse, sondern sie sind bis zur Hälfte in das Buchsenteil 23 eingesteckt. Innerhalb des Buchsenteils sind für jeden Steckerstift geschlitzte Zentrierhülsen 24 schwimmend gelagert. Das Buchsenteil 23 kann in das Steckergehäuse 8 eingerastet werden, wobei die Noppen 44 am Buchsenteil in die Rastöffnungen 45 am Steckergehäuse einrasten.

Das eingesetzte Buchsenteil 23, welches unter anderem als Vorzentriereinheit dient, ermöglicht es, die Steckerstifte bzw. die Spannhülsen eines Gegensteckerteils aufzunehmen. Die Verwendung des Buchsenteils 23 ist dabei optional, je nachdem, mit welchem Gegensteckerteil das jeweilige Steckerteil gekoppelt werden soll.

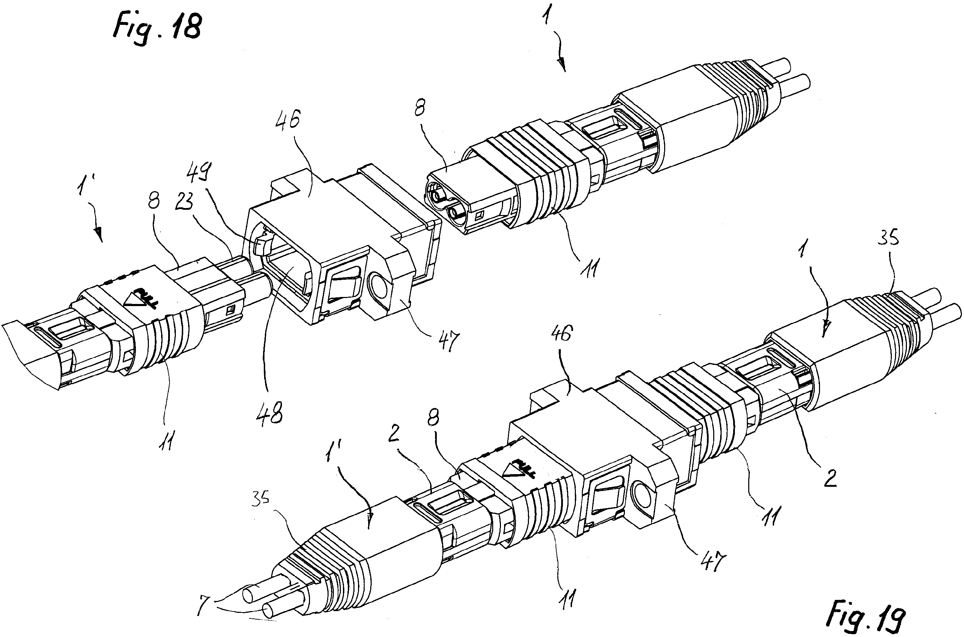

Die Figuren 18 und 19 zeigen ein weibliches Steckerteil 1' gemäss Figur 15, das mit einem männlichen Steckerteil 1 gemäss Figur 11 gekoppelt wird. Für die zugfeste Verriegelung der jeweiligen Steckergehäuse dient ein Mittelteil 46, das mit dem seitlichen Flansch 47 beispielsweise an einer Gerätewand montiert werden kann. Das Mittelteil verfügt über eine Durchgangsöffnung 48, in welche von beiden Seiten her die Steckergehäuse der beiden Steckerteile 1 und 1' eingesteckt werden können. Wie aus Figur 18 ersichtlich ist, ist die Durchgangsöffnung 48 am Eintritt auf beiden Seiten flankiert von federnden Sperrklinken 49. Beim Einstecken jedes Steckerteils werden diese aufgespreizt, bis sie in die seitlichen Mulden 9 an den Steckergehäusen (Figur 11) einrasten. Bis zum endgültigen Einrasten werden dabei die Entriegelungsschlitten gegen die Vorspannkraft der Schraubendruckfedern 33 zurückgeschoben, bis sie nach dem Einrasten die Sperrklinken 49 überdecken und dadurch in den Mulden sichern. Durch Zug am Kabel oder am Steckergehäuse kann die Verriegelung nicht gelöst werden. Dagegen werden die Sperrklinken 49 durch Zug am Entriegelungsschlitten befreit, womit die Steckverbindung gelöst werden kann.

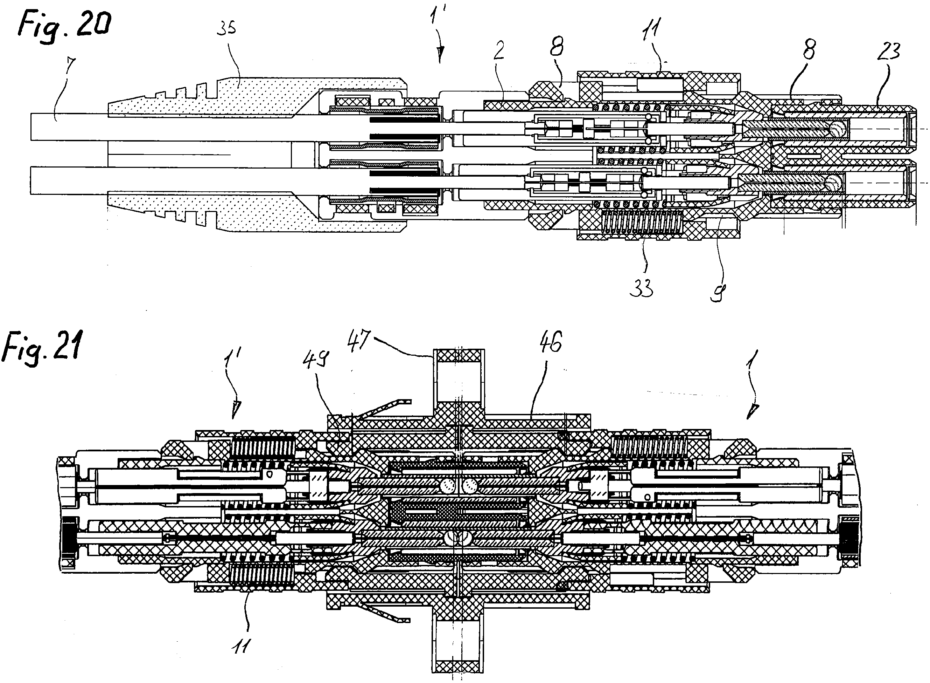

Zum besseren Verständnis ist in Figur 20 nochmals das weibliche Steckerteil 1' gemäss Figur 18 im Längsschnitt dargestellt. Sichtbar sind hier insbesondere die Verrastungen zwischen der Stifthalterung 2 und dem Steckergehäuse 8, sowie zwischen dem Steckergehäuse 8 und dem Buchsenteil 23 auf der Seite der Steckerstifte. Von den Schraubendruckfedern 33 zum Vorspannen des Entriegelungsschlittens 11 ist hier nur eine dargestellt. Gut sichtbar sind die seitlichen Rastmittelmulden 9, welche vom Entriegelungsschlitten 11 überdeckt werden.

Figur 21 zeigt einen Längsschnitt durch die Steckverbindung gemäss Figur 19. Die Sperrklinken 49 sind in die Rastmittelmulden der jeweiligen Steckergehäuse eingerastet und von den Entriegelungsschlitten 11 überdeckt, womit ein Spreizen der Sperrklinken und damit ein Ausrasten nicht mehr möglich ist. Die Spannhülsen des männlichen Steckerteils 1 sind in das Buchsenteil 23 des weiblichen Steckerteils 1' eingeschoben, wobei sich die Enden 21 der Spannhülsen berühren. Gut sichtbar ist dabei in Figur 21 in der in der Abbildung oberen Lichtwellenleiterverbindung, dass zwischen den beiden Kugellinsen ein Zwischenraum verbleibt, der jedoch vom aufgeweiteten Lichtstrahl problemlos überbrückt wird. In der in der Abbildung unteren Lichtwellenleiterverbindung ist eine hypothetische Situation dargestellt, welche jeweils die maximal mögliche Bewegung jeder Kugellinse in eine Richtung zeigt.

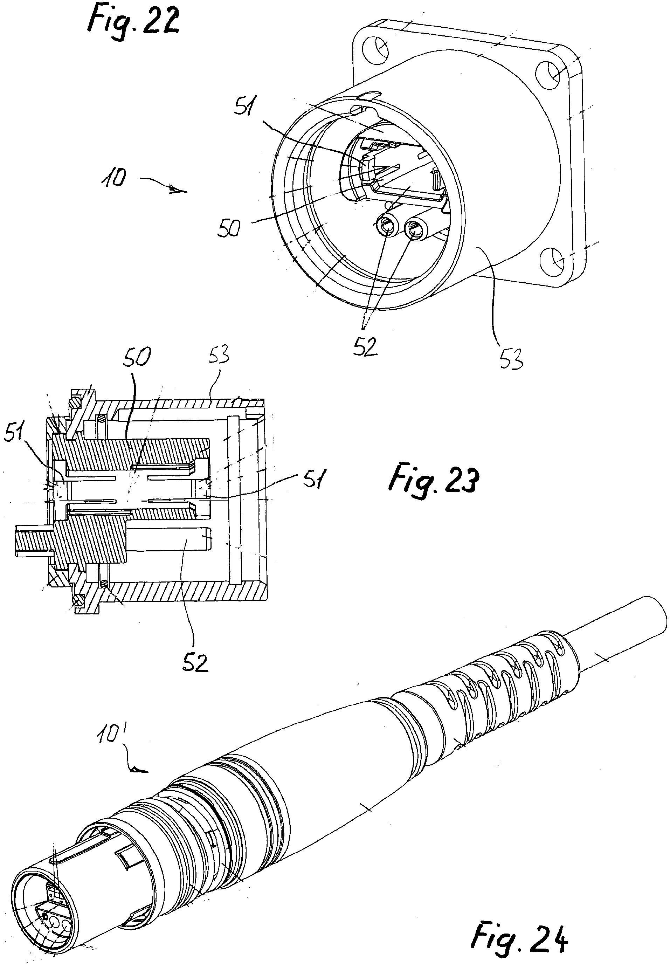

Die Figuren 22 bis 24 zeigen alternative Ausführungsformen eines Gegensteckerteils 10. Gemäss den Figuren 22 und 23 handelt es sich dabei um eine Chassibuchse, welche ähnlich wie das Mittelteil 46 gemäss Figur 21 an einer Gerätewand fixiert werden kann. In dem im Wesentlichen rotationssymmetrischen Gehäuse 53 der Chassibuchse ist eine Steckeraufnahme 50 gehalten, welche der Aufnahme der vorstehend beschriebenen Steckerteile dient. Die Verrastung erfolgt dabei an den Sperrklinken 51 auf die gleiche Weise, wie an Hand der Figur 21 beschrieben. Zusätzlich trägt die Steckeraufnahme 50 aber auch noch elektrische Kontaktbuchsen 52, über welche ein elektrischer Kontakt hergestellt werden kann.

Das kabelendseitige Gegensteckerteil 10' gemäss Figur 24 ist im Bereich der Steckerschnittstelle gleich ausgebildet wie die Chassibuchse gemäss Figur 22. Der einzige Unterschied besteht darin, dass das Gegensteckerteil nicht dazu bestimmt ist, eine Steckverbindung an einer Gehäusewand herzustellen, sondern zwischen zwei frei beweglichen kabelendseitigen Steckerteilen.

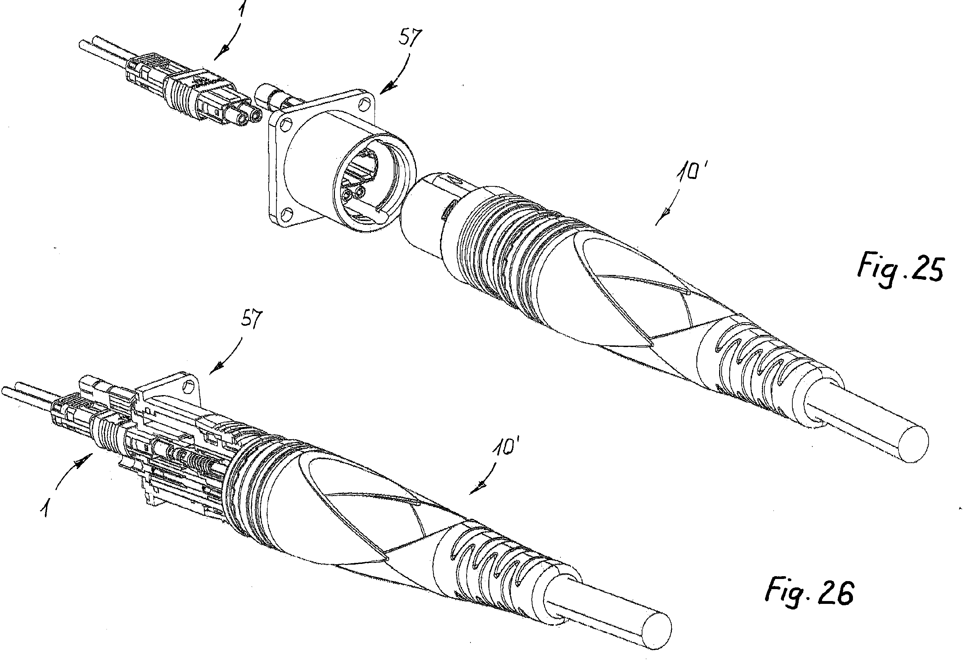

Die Figuren 25 und 26 zeigen nochmals eine Anordnung bestehend aus Steckerteil 1, Chassibuchse 57 und Gegensteckerteil 10 im gelösten und im zusammengesteckten Zustand. Bezüglich der Details wird auf die vorausgegangenen Figuren, insbesondere auf die Figuren 22 bis 24 verwiesen.

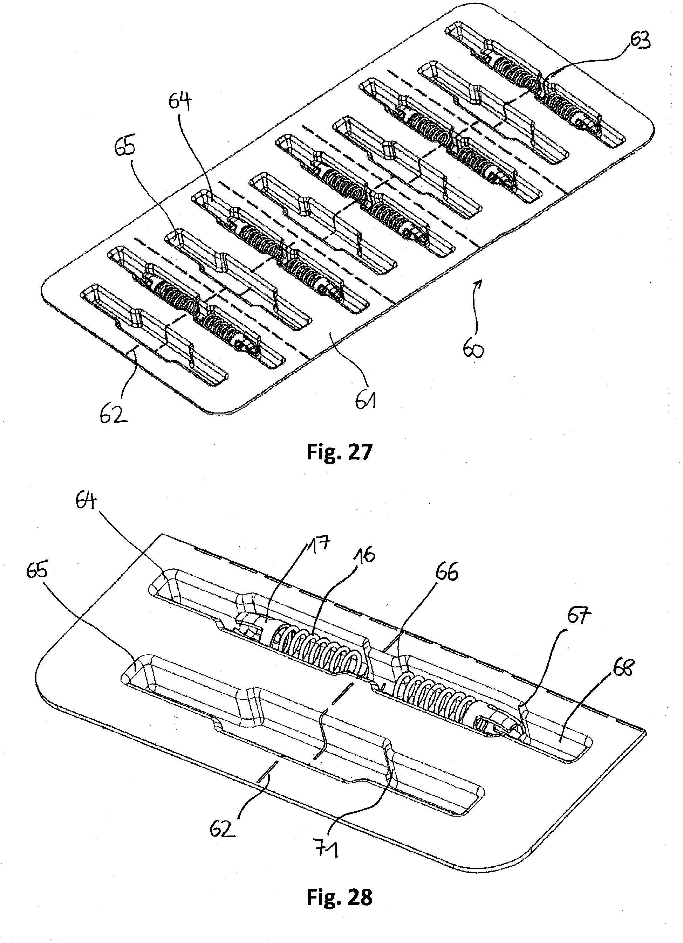

Die Figuren 27 und 28 zeigen eine besonders vorteilhafte Verpackung 60 zum Verpacken von Federelementen 63, wie Sie an einem erfindungsgemässen Steckerteil eingesetzt werden können. Jedes Federelement besteht dabei aus einer Schraubendruckfeder 16, die an einem Ende mit einer Sicherungshülse 17 versehen ist. Derartige Federelemente sind beispielsweise in Figur 3 dargestellt und dort beschrieben. Eine derartige Verpackung mit ihren erfindungsgemässen Merkmalen könnte aber auch im Zusammenhang mit konventionellen Steckerteilen eingesetzt werden. Die Aufgabe der Verpackung besteht darin, dass sie die Federelemente vor dem möglicherweise feldmässigen Einsatz schützt und dass sie gleichzeitig als Montagehilfe eingesetzt werden kann. Dazu besteht eine Verpackung 60 aus einer Muldenplatte 61 beispielsweise aus Kunststoffmaterial in welcher Aufnahmemulden 64 eingeformt sind, welche die einzelnen Federelemente 63 aufnehmen. Die Muldenplatte kann beispielsweise mittels einer transparenten Kunststofffolie abgeschlossen sein, entsprechend dem klassischen Prinzip von Blisterverpackungen. Gemäss Ausführungsbeispiel ist die Muldenplatte 61 mit einer Sollbruchstelle 62 versehen, welche die Muldenplatte in zwei symmetrische Hälften unterteilt. Jeder Aufnahmemulde 64 ist eine Montagemulde 56 zugeordnet.

Wie aus der Teildarstellung gemäss Figur 28 ersichtlich ist, verfügt jede Aufnahmemulde 64 über je eine Stützschulter 66 für den freiliegenden Teil der Schraubendruckfeder 16 und über eine Stützschulter 67 für die Sicherungshülse 17. Bezogen auf die Längsmittelachse der Aufnahmemulde 64 ist damit ein einzelnes Federelement unverlierbar gehalten. Auf der Seite der Sicherungshülse 17 ist die Aufnahmemulde mit einer Verlängerung 68 versehen. Die parallel angeordnete Montagemulde 65 ist kürzer als die Aufnahmemulde 64 und ausserdem etwas breiter ausgebildet. Eine Widerlagerschulter 71 ermöglicht das eigentliche Einrasten des Federelements auf die Stifthülse, wie nachstehend beschrieben.

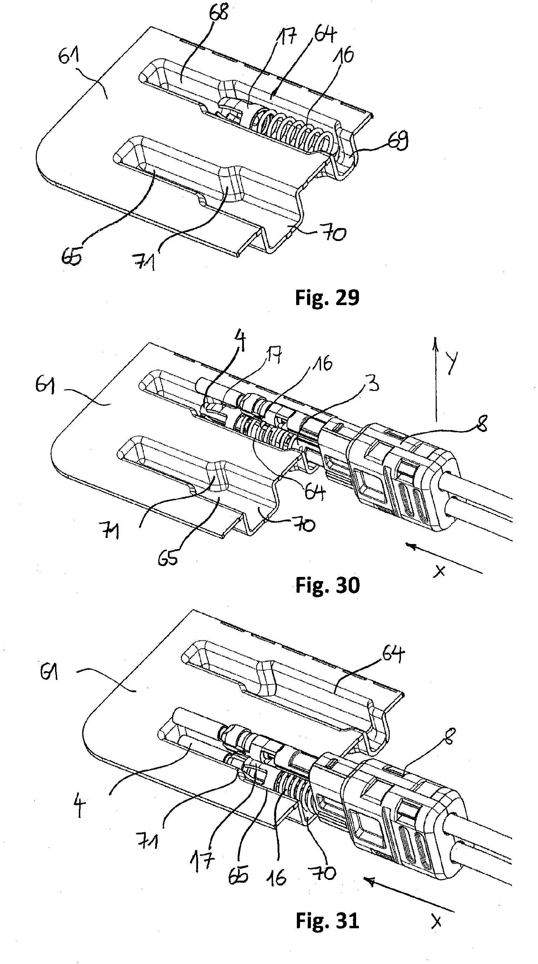

Figur 29 zeigt den linken Teil des Abschnitts gemäss Figur 28, nachdem der rechte Teil entlang der Sollbruchstelle 62 abgebrochen wurde. Dadurch entsteht an der Aufnahmemulde 64 eine axial zugängliche Öffnung 69 und an der Montagemulde 65 eine entsprechend breitere Öffnung 70. Wie aus Figur 30 ersichtlich ist, wird jetzt durch die Öffnung 69 die Stifthülse 3 eines Steckergehäuses 8 eingeschoben, wobei der Steckerstift 4 die Schraubendruckfeder 16 und die Sicherungshülse 17 durchdringt. Diesbezüglich wird nochmals auf die analoge Situation gemäss Figur 3 hingewiesen. Die Kraftrichtung ist mit dem Pfeil x angedeutet. Das Federelement 63 bleibt dabei relativ zur Muldenplatte 61 immer am gleichen Ort.

Nach der Aufnahme des Federelements in der Aufnahmemulde 64 wird die ganze Einheit in Pfeilrichtung y aus der Aufnahmemulde herausgehoben und gemäss Figur 31 von der Öffnung 70 her in die Montagemulde 65 in Pfeilrichtung x eingeführt. Dabei liegt die Sicherungshülse 17 an der Widerlagerschulter 71 an und die Vorschubbewegung in Pfeilrichtung x wird solange fortgesetzt, bis die Sicherungshülse 17 in der entsprechenden Nut an der Stiftaufnahme einrastet (Nut 39 bei Figur 3). Ersichtlicherweise wird dabei auch die Schraubendruckfeder 16 vorgespannt. Nach dem Einrasten der Sicherungshülse 17 kann der Verpackungsabschnitt entfernt werden. Ersichtlicherweise steht mit einer derartigen Verpackung stets eine Montagehilfe zur Verfügung, so dass keine unmittelbare Berührung der Bauteile erforderlich ist. Ausserdem sind die relativ kleinen Federelemente unverlierbar und vereinzelt aufgenommen, was die Arbeit insbesondere bei feldmässigem Einsatz wesentlich erleichtert.

## Patentansprüche

1. Steckerteil (1) für eine optische Steckverbindung umfassend
- eine Stifthalterung (2),
- wenigstens zwei in der Stifthalterung aufgenommene Stifthülsen (3, 3'), in denen je ein Steckerstift (4, 4') mit einem Lichtwellenleiter fixiert ist,
- ein mit der Stifthalterung verbundenes Steckergehäuse (8), welches die Steckerstifte ganz oder teilweise umgibt und welches Rastmittel (9) zum Erstellen einer Rastverbindung mit einem Gegensteckerteil aufweist,
- sowie ein auf dem Steckergehäuse (8) verschiebbar gelagerter Entriegelungsschlitten (11) zum Lösen der Rastverbindung mit dem Gegensteckerteil,
- wobei die Stifthalterung aus zwei miteinander verrastbaren oder verrasteten Halbschalen (12, 12') besteht,
- und wobei das Steckergehäuse (8) ebenfalls mit der Stifthalterung (2) verrastbar oder verrastet ist.

2. Steckerteil nach Anspruch 1, wobei das Steckergehäuse (8), die Rastmittel (9) und die Entriegelungshülse (11) derart ausgebildet sind, dass das Steckerteil (1) der Baunorm MPO-Multifiber-Push-On entsprechend IEC 61754-7 entspricht und mit einem Gegensteckerteil dieser Baunorm kompatibel ist.

3. Steckerteil nach Anspruch 1 oder 2, wobei die Stifthülsen (3, 3') einen Stiftaufnahmeabschnitt (13) aufweisen, in dem der Steckerstift gehalten ist und einen Kabelaufnahmeabschnitt (14) für den Anschluss an ein Lichtwellenleiterkabel (7), wobei der Kabelaufnahmeabschnitt zwei miteinander verbindbare oder verbundene Mantelteile (15, 15') aufweist und wobei im Steckerstift ein Lichtwellenleiterstummel (6) gehalten ist, dessen freies, dem Lichtwellenleiterkabel (7) zugewandtes Ende im Bereich der beiden verbundenen Mantelteile mit dem Lichtwellenleiter (5) des Lichtwellenleiterkabels verspleissbar oder verspleisst ist.

4. Steckerteil nach einem der Ansprüche 1 bis 3, wobei die Stifthülsen (3, 3') unter Federvorspannung an der Stifthalterung (2) abgestützt sind.

5. Steckerteil nach Anspruch 4, wobei auf jeder Stifthülse (3, 3') eine Schraubendruckfeder (16) gelagert ist, welche über den Steckerstift auf die Stifthülse aufschiebbar ist und welche mittels einer über den Steckerstift schiebbaren und an der Stifthülse einrastbaren Sicherungshülse (17) gesichert ist.

6. Steckerteil nach einem der Ansprüche 1 bis 5, wobei an der Stirnseite (18) jedes Steckerstifts (4, 4') eine Kugellinse (19) befestigt ist, welche derart innerhalb einer auf den Steckerstift aufgeschobenen Spannhülse (20) angeordnet ist, dass das freie Ende (21) der Spannhülse bezogen auf die Längsmittelachse (22) des Steckerstifts die Aussenfläche der Kugellinse überragt.

7. Steckerteil nach einem der Ansprüche 1 bis 6, wobei die Steckerstifte (4, 4') in einem Buchsenteil (23) eingeschoben sind, das mit dem Steckergehäuse (8) verrastet ist und in das die Steckerstifte eines Gegensteckerteils einsteckbar sind.

8. Stecker nach Anspruch 7, wobei im Buchsenteil für jeden Steckerstift eine schwimmend gelagerte Zentrierhülse (24) angeordnet ist.

9. Steckerteil nach einem der Ansprüche 1 bis 8, wobei die beiden Halbschalen (12, 12') der Stifthalterung (2) baugleich ausgebildet sind und wenigstens je eine Rastzunge (25) und wenigstens je eine Rastöffnung (26) aufweisen.

10. Steckerteil nach einem der Ansprüche 1 bis 9, wobei die Stifthalterung (2) für jede Stifthülse eine separate Haltekammer (27) aufweist, wobei die Haltekammern durch einen Zwischensteg (28) voneinander abgetrennt sind.

11. Steckerteil nach einem der Ansprüche 1 bis 10, wobei die Stifthalterung (2) einen Verbindungsabschnitt (29) aufweist, der in das Steckergehäuse (8) einschiebbar oder eingeschoben ist und an dem wenigstens eine Rastnase (30) angeordnet ist, die in eine komplementäre Rastöffnung (31) am Steckergehäuse einrastbar ist.

12. Steckerteil nach einem der Ansprüche 1 bis 11, wobei das Steckergehäuse (8) ein einstückiges Bauteil ist, das für jede Stifthülse (3, 3') eine separate Aufnahmekammer (32) aufweist, wobei die Aufnahmekammern sich in Längsrichtung zueinander öffnen.

13. Steckerteil nach einem der Ansprüche 1 bis 12, wobei der Entriegelungsschlitten (11) mittels zwei Schraubendruckfedern (33, 33') gegen die Steckerstirnseite (40) vorgespannt ist, wobei die Schraubendruckfedern an je einer Schulter (34) am Steckergehäuse (8) abgestützt sind.

14. Steckverbindung umfassend ein Steckerteil (1) nach einem der Ansprüche 1 bis 13 sowie ein Gegensteckerteil, das entweder als an einer Gehäusewand fixierbare Chassibuchse oder als kabelendseitiger Steckerverbinder ausgebildet ist.

15. Steckverbindung nach Anspruch 14, wobei das Gegensteckerteil zusätzlich zu den beiden zum Steckerteil komplementären optischen Eingängen wenigstens einen elektrischen Kontakt für die Erstellung einer elektrischen Steckverbindung aufweist.
